# EUROPÄISCHE PATENTSCHRIFT

(11) **EP 0 893 458 B1**
(45) Veröffentlichungstag und Bekanntmachung des Hinweises auf die Patenterteilung: **07.04.2004**
(21) Anmeldenummer: 98112512.3
(22) Anmeldetag: 07.07.1998
(51) Int. Cl.: C08G 18/32, C08G 18/65, C08G 18/62, C09D 175/02

(54) **Verwendung eines Überzugsmittels und Verfahren zur Mehrschichtlackierung**
Use of a coating and multi-layer coating process
Utilisation d'un agent de revêtement et procédé de revêtement multi-couche

(30) Priorität: 23.07.1997 DE 19731540
(43) Veröffentlichungstag der Anmeldung: 27.01.1999
(73) Patentinhaber: E.I. DU PONT DE NEMOURS AND COMPANY, Wilmington Delaware 19898 (US)
(72) Erfinder: Becker, Heinz-Dietholf, 53121 Bonn (DE); Bremer, Gerhard, 50226 Frechen (DE); Stephan, Werner, 42111 Wuppertal (DE)
(74) Vertreter: Gille Hrabal Struck Neidlein Prop Roos

(56) Entgegenhaltungen:
- EP-A- 0 531 249
- EP-A- 0 686 654
- US-A- 5 516 873
- US-A- 5 591 807

## Beschreibung

Die Erfindung betrifft die Verwendung zweikomponentiger lösemittelverdünnbarer Überzugsmittel auf Basis einer Polyisocyanatkomponente und einer Komponente mit isocyanatreaktiven Gruppen zur Herstellung von Mehrschichtlackierungen. Die verwendeten Überzugsmittel weisen einen sehr hohen Festkörpergehalt auf und werden insbesondere in der Fahrzeug- und Fahrzeugteilelackierung verwendet.

Zweikomponentige lösemittelbasierende Überzugsmittel auf Basis einer Polyhydroxylund einer Polyisocyanatkomponente sind seit langem bekannt. Man erhält aus diesen Überzugsmitteln qualitativ hochwertige Überzüge mit sehr guter Chemikalien- und Lösemittelbeständigkeit sowie einem hohen optischen und mechanischen Eigenschaftsniveau.

Im Rahmen allgemeiner ökologischer Forderungen ist man bestrebt, den Lösemittelgehalt bzw. den Anteil flüchtiger organischer Verbindungen (VOC) in lösemittelhaltigen Überzugsmitteln so gering wie möglich zu halten und einen hohen Festkörpergehalt zu erzielen. Das erreicht man beispielsweise durch den Einsatz sogenannter Reaktivverdünner, welche im Überzugsmittel bei der Applikation zunächst als Lösemittel wirken und während des Vernetzungsprozesses über reaktive Gruppen in das Bindemittelsystem mit eingebaut werden.

In der EP-A-0 470 461 werden Bindemittel für zweikomponentige (2K) Autoreparaturlacke beschrieben, welche Polyisocyanate und eine isocyanatreaktive Komponente enthalten. Die isocyanatreaktive Komponente basiert auf einer Polyhydroxylverbindung (OH-funktionelle Polyacrylate und/oder Polyester) und einem estergruppenhaltigen Polyamin mit sekundären Aminogruppen.

In der EP-A-0 531 249 werden bei Raumtemperatur härtbare Beschichtungsmittel beschrieben, die auf einem Polyisocyanat, einem OH-funktionellen Harz und einem Aldimin oder Ketimin basieren. Zusätzlich können weitere Verbindungen, wie z.B. Reaktionsprodukte aus Diolen und epsilon-Caprolacton, sekundäre Diamine oder Oxazolidine, als Reaktivverdünner eingesetzt werden. Das Gewichtsverhältnis von OHfunktionellem Harz zu Aldimin oder Ketimin und gegebenenfalls weiteren Reaktivverdünnern beträgt etwa 2 : 1 bis 1 : 1,5.

Aus den vorstehend beschriebenen Bindemittelsystemen können Überzugsmittel formuliert werden, die im Vergleich zu herkömmlichen OH/NCO-vernetzenden Systemen einen niedrigen Anteil an flüchtigen organischen Verbindungen und damit einen erhöhten Festkörpergehalt aufweisen. Dennoch sind die genannten Überzugsmittel für spezielle Anwendungen und Einsatzgebiete, insbesondere in der Fahrzeugreparaturlackierung nicht einsetzbar, weil sie den dortigen Anforderungen nicht genügen, beispielsweise werden bei Fahrzeugreparaturlackierungen vom Gesetzgeber extrem niedrige VOC-Werte von 250 g/l (2,1 lbs/gal) und darunter gefordert. Ein weiterer Nachteil dieser 2K-Systeme besteht in der viel zu kurzen Verarbeitungszeit.

Die EP-A-0 689 881 beschreibt festkörperreiche Beschichtungsmittel, welche auf einer Polyisocyanatkomponente und einer Reaktivkomponente basieren, wobei die Reaktivkomponente hydroxylgruppenfrei ist und blockierte Polyamine sowie Polyamine mit Estergruppen und sekundären Aminogruppen enthält. Die Trockenzeit dieser 2K-Überzugsmittel ist jedoch unbefriedigend lang. Außerdem ergeben die Überzugsmittel matte Filme.

Die DE-A-195 42 119 beschreibt Füller und Grundierungen, die im spritzfertigen Zustand einen sehr hohen Festkörpergehalt aufweisen. Die Überzugsmittel enthalten spezielle OH-funktionelle Acrylatharze, estergruppenhaltige sekundäre Polyamine und Polyisocyanate als Vernetzer. Negativ wirkt sich in diesen Überzugsmitteln die schlechte Pigmentbenetzung aus. Es kommt zum Absetzen der Pigmente.

Die US-A-5 516 873 beschreibt ein Polyharnstoff-Polyurethan-Überzugsmittel, das A) Hexamethylendiisocyanat, B), ein Aldimin, aus Diaminocyclohexylmethan und Isobutyraldehyd hergestellt, C) ein Polyaspartat, basierend auf einem cycloaliphatischen Diamin und Maleinsäurediester und D) ein Polyesterpolyol enthält. Das Verhältnis der gegenüber Isocyanatgruppen reaktiven Gruppen zu Isocyanatgruppen beträgt 1 und das Äquivalentverhältnis der Komponenten B) + D) beträgt 95/5.

Aufgabe der Erfindung war es, lösemittelbasierende isocyanatvernetzende Überzugsmittel zur Verwendung bei der Herstellung von Mehrschichtlackierungen bereitzustellen, die im spritzfertigen Zustand einen sehr hohen Festkörpergehalt aufweisen, eine sehr gute Pigmentbenetzung zeigen, bei ausreichender Verarbeitungszeit rasch trocknen und Überzüge mit guter Haftung und guter Schleifbarkeit ergeben.

Die Aufgabe wird gelöst durch die Verwendung eines Überzugsmittels enthaltend
A) ein oder mehrere Polyisocyanate mit freien Isocyanatgruppen,
B) ein oder mehrere Polyamine mit blockierten Aminogruppen der allgemeinen Formel 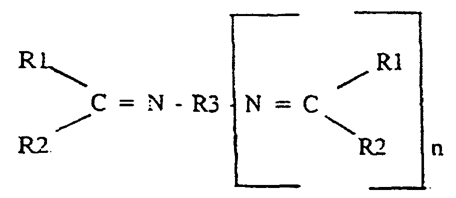 wobei n = 1-3
   R1 und R2, die gleich oder verschieden sein können, = H, ein linearer oder verzweigter aliphatischer Kohlenwasserstoffrest mit 1 - 8 C-Atomen oder ein cycloaliphatischer Kohlenwasserstoffrest mit 3 - 8 C-Atomen,
   - R3 =: (n+1)-wertiger organischer Rest, wie er durch Entfernung der primären Aminogruppen aus einem entsprechenden aliphatisch oder cycloaliphatisch gebundene Aminogruppen aufweisenden Polyamin des Molekulargewichtsbereiches Mn 60 - 2000 erhalten wird,
   bedeuten,
C) ein oder mehrere estergruppenhaltige Polyamine mit sekundären Aminogruppen der allgemeinen Formel 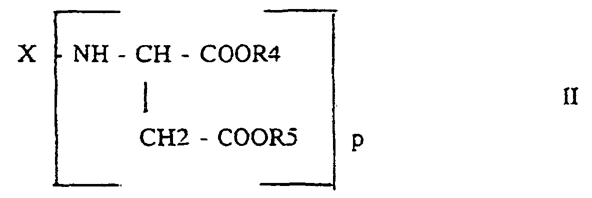 wobei X für einen p-wertigen organischen Rest steht, wie er durch Entfernung der primären Aminogruppen aus einem entsprechenden, aliphatisch oder cycloaliphatisch gebundene Aminogruppen aufweisenden Polyamin des Molekulargewichtsbereiches Mn 60 - 6000 erhalten wird,
   R4 und R5 für gleiche oder verschiedene Alkylreste mit 1-8 C-Atomen stehen und p für eine ganze Zahl von mindestens 2 steht,
D) ein oder mehrere hydroxyfunktionelle Harze sowie
   gegebenenfalls ein oder mehrere organische Lösemittel und gegebenenfalls ein oder mehrere lackübliche Pigmente und/oder Füllstoffe und/oder Additive,
wobei die Polyisocyanatkomponente A) in einem derartigen Mengenanteil vorliegt, daß auf eine mit Isocyanat reaktionsfähige Gruppe (im folgenden als "aktiver Wasserstoff" bezeichnet) der Komponenten B, C und D 0,5 bis 2 Isocyanatgruppen entfallen und die Komponente D) in einer derartigen Menge vorliegt, daß das Gewichtsverhältnis der Summe der Komponenten B) + C) zur Komponente D) mindestens 10 : 1, bevorzugt mindestens 14 : 1 beträgt, wobei die Obergrenze bevorzugt bei 25 : 1 liegt, jeweils bezogen auf den Festkörpergehalt (= die 100 %ige Form) der jeweiligen Komponente. Besonders bevorzugt beträgt das Gewichtsverhältnis B) + C) zu D) 16 : 1 bis 25 : 1, zur Herstellung von Mehrschichtlackierungen.

Das Gewichtsverhältnis von Komponente B) zu Komponente C) kann in weiten Grenzen variieren. Komponente B) kann zu 5 - 95 Gew.-%, bevorzugt zu 35 - 65 Gew.-%, und Komponente C) zu 95 - 5 Gew.-%, bevorzugt zu 65 - 35 Gew.-%, jeweils bezogen auf die Gesamtmenge (Summe des Gewichts) an B) und C), vorliegen.

Erfindungswesentlich ist, daß die hydroxyfunktionelle Harzkomponente (Komponente D) in den vorstehend angegebenen, als katalytisch bezeichneten Mengen, bezogen auf die Menge der zur Vernetzungsreaktion zur Verfügung stehenden isocyanatreaktiven Komponenten B) + C), eingesetzt wird.

In den erfindungsgemäß verwendeten Überzugsmitteln wird ein sehr hoher Festkörpergehalt, beispielsweise von mindestens 80 Gew.-%, insbesondere 80-90 Gew.-%, erzielt. Überraschend wurde gefunden, daß sich trotz des extrem hohen Festkörpergehaltes die Überzugsmittel gut applizieren lassen und bei ausreichender Topfzeit eine rasche Trocknung zeigen. Überraschend war auch die sehr gute Haftung, insbesondere auf durch Säure härtbaren Primern (z.B. säurehärtende Polyvinylbutyralprimer), die auch üblicherweise als Washprimer bezeichnet werden.

Bei der Polyisocyanatkomponente A) des erfindungsgemäß verwendeten Überzugsmittels handelt es sich um beliebige organische Polyisocyanate mit aliphatisch, cycloaliphatisch, araliphatisch und/oder aromatisch gebundenen freien Isocyanatgruppen. Insbesondere sind die Polyisocyanate bei Raumtemperatur flüssig oder durch Zusatz organischer Lösemittel verflüssigt. Die Polyisocyanate weisen als solche oder im durch Lösemittel verflüssigten Zustand bei 23°C im allgemeinen eine Viskosität von 1 bis 6000 mPas, vorzugsweise über 5 und unter 3000 mPas auf.

Bevorzugt handelt es sich bei den Polyisocyanaten um Polyisocyanate oder Polyisocyanatgemische mit ausschließlich aliphatisch und/oder cycloaliphatisch gebundenen Isocyanatgruppen mit einer mittleren NCO-Funktionalität von 1,5 bis 5, bevorzugt 2 bis 4.

Besonders gut geeignet sind beispielsweise die dem Fachmann geläufigen sogenannten "Lackpolyisocyanate" auf Basis von Hexamethylendiisocyanat, 1-Isocyanato-3,3,5-trimethyl-5-isocyanatomethyl-cyclohexan (IPDI), Norbornandiisocyanat und/oder Bis(isocyanatocyclohexyl)-methan und die an sich bekannten Biuret-, Allophanat-, Urethan- und/oder Isocyanuratgruppen aufweisenden Derivate dieser Diisocyanate, die im Anschluß an ihre Herstellung, vorzugsweise durch Destillation, vom überschüssigen Ausgangsdiisocyanat bis auf einen Restgehalt von weniger als 0,5 Gew.-% befreit worden sind. Die Diisocyanate können auch durch durch Umsetzung mit Wasser oder mehrwertigen Alkoholen, wie z.B Trimethylolpropan oder Glycerin, zu höherfunktinellen Verbindungen umgesetzt worden sein.

Ebenfalls sehr gut geeignet sind sterisch behinderte Polyisocyanate der allgemeinen Formel 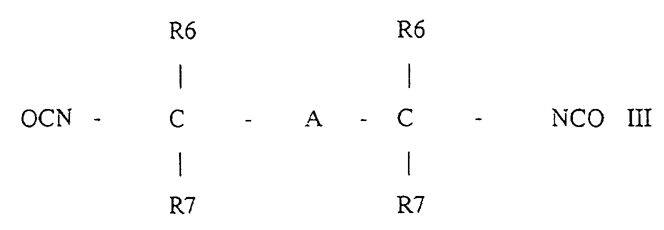 wobei
R6 = H oder R7,
R7 = CₘH₂ₘ₊₁ mit m = 1 bis 6 bedeuten.

Die Substituenten R6 und R7 sind entweder linear oder verzweigt, gleich oder ungleich. Das Grundgerüst A kann aus einer einfachen Bindung, einem aromatischen oder alicyclischen Ring oder aus einer aliphatischen linearen oder verzweigten C-Kette mit 1 bis 12 C-Atomen bestehen. Beispiele hierfür sind 1,1,6,6-Tetramethylhexamethylendiisocyanat, 1,5-Dibutyl-pentamethylendiisocyanat, p- oder m-Tetramethylxylylendiisocyanat und die entsprechenden hydrierten Homologen. Die Diisocyanate können auch in üblicher Weise, wie vorstehend bereits genannt, zu höherfunktionellen Verbindungen umgesetzt worden sein.

Ebenfalls geeignet, jedoch weniger bevorzugt sind aromatische Polyisocyanate. Beispiele für aromatische Polyisocyanate sind solche auf Basis von 2,4-Diisocyanatotoluol, 2,6-Diisocyanatotoluol und 4,4-Diisocyanatodiphenylmethan, sowie deren Gemische.

Die Polyisocyanate können ebenso in Form isocyanatmodifizierter Harze verwendet werden.

Bei der Komponente B) handelt es sich um ein oder mehrere Polyamine mit blockierten Aminogruppen der vorstehenden allgemeinen Formel I. Bevorzugt sind solche als Polyaldimin oder Polyketimin bezeichneten Verbindungen der allgemeinen Formel I, bei denen n=1, R1=H, R2=Kohlenwasserstoffrest mit 1 bis 8 Kohlenstoffatomen bedeuten.

Die Komponente B) wird erhalten, indem Polyamine mit primären Aminogruppen in an sich bekannter Weise mit Aldehyden oder Ketonen umgesetzt werden.

Bei den zur Umsetzung geeigneten Polyaminen handelt es sich um Verbindungen mit mindestens 2, bevorzugt 2, aliphatisch und/oder cycloaliphatisch, gebundenen primären Aminogruppen. Geeignete Polyamine haben beispielsweise ein Molekulargewicht Mn von 60 bis 2000, bevorzugt von 88 - 238. Beispiele für entsprechende Polyamine sind Ethylendiamin, 1,2-Diaminopropan, 1,4-Diaminobutan, 1,6-Diaminohexan, 2-Methyl-1,5-Diaminopentan, 2,5-Diamino-2,5-dimethylhexan, 2,2,4- und/oder 2,4,4-Trimethyl-1,6-diaminohexan, 1,11-Diaminoundecan, 1,12-Diaminododecan, Hexahydro-2,4- und/oder 2,6- diaminotoluol, 1-Amino-3,3,5-trimethyl-5-aminomethylcyclohexan, Isopropyl-2,4- und/oder 2,6-diaminocyclohexan, 2,4'- und/oder 4,4'-Diaminodicyclohexylmethan, 3,3'-Dimethyl-4,4'diaminodicyclohexylmethan und die isomeren C-Monomethyldiaminodicyclohexylmethane.

Zur Herstellung der Komponente B) geeignete Aldehyde bzw. Ketone weisen vorzugsweise ein Molekulargewicht von 44 - 128, geeignete Ketone vorzugsweise von 58 - 198 auf. Beispiele für geeignete Aldehyde sind Acetaldehyd, Propionaldehyd, n-Butyraldehyd, Isobutyraldehyd, Trimethylacetaldehyd, 2,2-Dimethylpropanal, 2-Ethylhexananl, 3-Cyclohexan-1-carboxaldehyd, Hexanal, Heptanal, Octanal, Benzaldehyd, Valeraldehyd, p-Toluylaldehyd, Phenylethanal, Tetrahydrobenzaldehyd, Hexahydrobenzaldehyd. Besonders bevorzugt sind n-Butyraldehyd, Isobutyraldehyd, Trimethylacetaldehyd, 2-Ethylhexanal und Hexahydrobenzaldehyd.

Beispiele für geeignete Ketone sind Aceton, Methylethylketon, Methylpropylketon, Methylisopropylketon, Methylbutylketon, Methylisobutylketon, Methyl-tert.butylketon, Methyl-n-amylketon, Methylheptylketon, Diethylketon, Ethylbutylketon, Ethylamylketon, Diisopropylketon, Diisobutylketon, Cyclopentanon, Cyclohexanon, Isophoron, 5-Methyl-3-heptanon, 1-Phenyl-2-propanon und Methylnonylketon.

Besonders geeignete Ketone sind Methylethylketon, Methylisobutylketon, Aceton, Cyclohexanon, Cyclobutanon und Cyclopentanon.

Es können Gemische verschiedener Komponenten B) vorliegen.

Bei der Komponente C) handelt es sich um Verbindungen der vorstehenden allgemeinen Formel II. Besonders bevorzugt sind solche als Polyasparaginsäurederivate bezeichneten Verbindungen der allgemeinen Formel II, in denen p=2 ist und X für einen zweiwertigen Kohlenwasserstoffrest steht, wie er durch Entfernung der Aminogruppen aus 1,4-Diaminobutan, 1,6-Diaminobutan, 1,6-Diaminohexan, 2,2,4- und 2,4,4-Trimethyl-1,6-diaminohexan, 1-Amino-3,3,5-trimethyl-5-aminomethyl-cyclohexan, 4,4'-Diaminodicyclohexylmethan oder 3,3'-Dimethyl-4,4'-diamonodicyclohexylmethan erhalten wird. Bevorzugte Reste R4 und R5 sind Methyl-, Ethyl-, n-Butyl- und 2-Ethylhexylreste.

Die Herstellung der Komponente C) kann in an sich bekannter Weise durch Umsetzung der entsprechenden primären Polyamine der Formel X-(-NH₂)ₙ mit Malein- oder Fumarsäureestern der allgemeinen Formel R4OOC-CH=CH-COOR5 erfolgen. Geeignete Malein- oder Fumarsäureester sind beispielsweise Maleinsäuredimethylester, Maleinsäurediethylester, Maleinsäuredi-n-butylester und die entsprechenden Fumarsäureester.

Geeignete Polyamine zur Herstellung der Komponente C) sind beispielsweise die bereits vorstehend zur Herstellung der Komponente B) genannten Polyamine mit primären Aminogruppen.

Es können Gemische verschiedener Komponenten C) vorliegen.

Als Komponente D) kann ein beliebiges hydroxyfunktionelles Harz eingesetzt werden.

Dabei soll das hydroxyfunktionelle Harz maximal in einer derartigen Menge vorliegen, daß das Gewichtsverhältnis der Summe der Komponenten B) + C) zur Komponente D) mindestens 10 : 1, bevorzugt mindestens 14 : 1, beträgt, bezogen auf den Festkörpergehalt bzw. die 100 %ige Form der jeweiligen Komponente. Besonders bevorzugt beträgt das Gewichtsverhältnis B) + C) zu D) 16 : 1 bis 25 : 1.

Bei dem hydroxyfunktionellen Harz kann es sich beispielsweise um die aus der Herstellung von Polyurethanbeschichtungsmitteln bekannten üblichen organischen hydroxyfunktionellen Harze handeln. Beispiele für solche hydroxyfunktionellen Harze sind Polyester-, Polyurethan-, Polycarbonat-, Alkyd- und Polyacrylatharze.

Bevorzugt haben die hydroxyfunktionellen Harze ein Molekulargewicht Mn von 300 bis 500000 und eine OH-Zahl von 20 bis 300 mg KOH/g. Besonders bevorzugt werden als Komponente D) hydroxyfunktionelle Polyacrylate eingesetzt, die ein Molekulargewicht Mn von 300 bis 50000, beispielsweise 500 bis 20000, besonders bevorzugt von 500 bis 10000 und eine OH-Zahl von 20 bis 250 mg KOH/g, besonders bevorzugt 30 bis 200 mg KOH/g aufweisen. Es handelt sich dabei um Hydroxylgruppen aufweisende Copolymerisate olefinisch ungesättigter Verbindungen, beispielsweise von Hydroxylgruppen aufweisenden olefinisch ungesättigten Monomeren a) und hydroxylgruppenfreien olefinisch ungesättigten Monomeren b).

Hydroxylgruppen aufweisende olefinisch ungesättigte Monomere a) sind beispielsweise die Hydroxyalkylester ungesättigter Carbonsäuren, z.B.der Acrylsäure und Methacrylsäure. Beispiele hierfür sind Hydroxyethyl(meth)acrylat, Hydroxypropyl(meth)acrylat, Hydroxybutyl(meth)acrylat, Hydroxyhexyl(meth)acrylat, 2-Hydroxypropyl(meth)acrylat, 2-Hydroxybutyl(meth)acrylat. Ebenso sind als hydroxylgruppenhaltige ungesättigte Monomere die Umsetzungsprodukte aus 1 Mol Hydroxyalkyl(meth)acrylat und 2 Mol eines Lactons, bevorzugt epsilon-Caprolacton, geeignet. Weitere OH-funktionelle Monomere sind die Umsetzungsprodukte von Acrylsäure mit Glycidylestem von aliphatischen gesättigten Monocarbonsäuren mit einem tertiären oder quarternären alpha-C-Atom. Bevorzugt sind hierbei die entsprechenden Umsetzungsprodukte von gesättigten C₅-C₂₀-Monocarbonsäuren. Andere hydroxylgruppenhaltige Verbindungen sind Allylalkohol, Monovinylether von Polyalkoholen, besonders von Diolen wie z. B. der Monovinylether des Ethylenglykols oder Butandiols, sowie hydroxylgruppenhaltige Allylether oder -ester wie 2,3-Dihydroxypropylmonoallylether, Trimethylpropranmonoallylether oder 2,3-Dihydoxypropansäureallylether.

Als hydroxylgruppenfreie ungesättigte Monomere b) können beispielsweise eingesetzt werden:
b1) ungesättigte Monomere mit mindestens einer Carboxylgruppe,
b2) aliphatische oder cycloaliphatische Ester von ungesättigten Carbonsäuren mit einwertigen Alkoholen mit 1 - 20 C-Atomen bzw. mit 3 - 20 C-Atomen,
b3) vinylaromatische Monomere und
b4) weitere von b1) bis b3) verschiedene ungesättigte Monomere.

Beispiele für Monomere b1) sind Acryl- und Methacrylsäure, Croton- und Isocrotonsäure, Malein-, Fumar-, Itaconsäure sowie deren Halbester. Bevorzugt sind Acrylsäure und Methacrylsäure.

Beispiele für Monomere b2) sind (cyclo)aliphatische Ester der Acrylsäure und Methacrylsäure, wie z.B. Methylacrylat, Ethylacrylat, Butylacrylat, tert.-Butylacrylat, Cyclohexylacrylat, Isobornylacrylat und die entsprechenden Methacrylate.

Beispiele für Monomere b3) sind Styrol, alpha-Methylstyrol und 4-Phenylstyrol.

Beispiele für Monomere b4) sind Vinylester, wie Vinylacetat, Vinylester aliphatischer gesättigter Monocarbonsäuren mit einem tertiären oder quarternären alpha-C-Atom, bevorzugt die Vinylester der entsprechenden C₅-C₂₀-Monocarbonsäuren, und Silangruppen enthaltende Monomere wie (Meth)acryloxypropyltrimethoxysilan und (Meth)acryloxypropyltris(2-methoxyethoxy)silan.

Für die Herstellung der hydroxyfunktionellen Acrylatcopolymere kommen beispielsweise die üblichen radikalbildenden Polymerisationsinitiatoren in Frage. Die Polymerisation kann in dem Fachmann geläufiger Weise beispielsweise als Substanzoder Lösungspolymerisation durchgeführt werden.

Es können beliebige Gemische der erfindungsgemäßen Komponente D) eingesetzt werden.

Die Herstellung der erfindungsgemäß verwendeten Bindemittelkombination kann durch Abmischen der Einzelkomponenten erfolgen. Da es sich um zweikomponentige Überzugsmittel handelt, müssen die Polyisocyanatkomponente A und die isocyanataktuven Komponenten B), C) und D) bis kurz vor der Applikation getrennt gelagert werden. Dabei können die Komponenten B), C) und D) allein oder in Gemischen gelagert werden.

Die erfindungsgemäß verwendeten Überzugsmittel können organische Lösemittel enthalten. Diese können sowohl aus der Herstellung der einzelnen Bindemittelkomponenten stammen als auch separat zugegeben werden. Als organische Lösemittel eignen sich beispielsweise: Glykolether, wie Ethylenglykoldimethylether; Propylenglykoldimethylether; Glykoletherester, wie Ethylglykolacetat, Butylglykolacetat, 3-Methoxy-n- butylacetat, Butyldiglykolacetat, Methoxypropylacetat, Ester wie Butylacetat, Isobutylacetat, Amylacetat, Butylpropionat, Ketone, wie Methylethylketon, Methylisobutylketon, Cyclohexanon, Isophoron, aromatische Kohlenwasserstoffe (z.B. mit einem Siedebereich von 136 - 180°C) und aliphatische Kohlenwasserstoffe.

In den erfindungsgemäß verwendeten Überzugsmitteln können auch Pigmente und/oder Füllstoffe enthalten sein. Als Pigmente sind alle lacküblichen Pigmente organischer oder anorganischer Natur geeignet. Bei den Pigmenten kann es sich z.B. um farbgebende Pigmente und/oder um Korrosionsschutzpigmente handeln. Beispiele für anorganische oder organische Farbpigmente sind Titandioxid, mikronisiertes Titandioxid, Eisenoxidpigmente, Ruß, Azopigmente, Phthalocyaninpigmente, Chinacridon- oder Pyrrolopyrrolpigmente. Ein Beispiel für ein Korrosionsschutzpigment ist Zinkphosphat. Beispiele für übliche Füllstoffe sind Aluminiumhydroxid, Calcium-Magnesiumcarbonat, Kieselsäure, Aluminiumsilikat, Magnesiumsilikat, Calciumcarbonat, Bariumsulfat, Kaolin und Talkum.

Die Überzugsmittel können zusätzlich lackübliche Additive enthalten. Das sind beispielsweise Verlaufsmittel auf der Basis von Acryl- oder Methacrylhomopolymerisaten oder Silikonöle, Weichmacher wie Phosphorsäure, Phthalsäure-oder Zitronensäureester, Rheologiebeeinflusser, wie pyrogenes Siliziumdioxid, hydriertes Ricinusöl, Mikrogele, Katalysatoren, Netz-, Antiabsetz- und Dispergiermittel. Die Additive werden in üblichen, dem Fachmann geläufigen Mengen, eingesetzt.

Zur Herstellung der Überzugsmittel werden die Einzelbestandteile miteinander vermischt und in üblicher Weise, z.B. mittels Dissolver oder Rührwerksmühle, homogenisiert bzw. vermahlen. Das Vermischen erfolgt kurz vor der Applikation. Dabei werden die isocyanatreaktiven Komponenten B), C) und D) gegebenenfalls mit Pigmenten, Füllstoffen, Lösemitteln und lacküblichen Additiven mit der Polyisocyanatkomponente A) gründlich vermischt. Danach kann gegebenenfalls mit organischen Lösemitteln auf Spritzviskosität eingestellt werden.

Die auf diese Weise hergestellten Überzugsmittel sind besonders geeignet zur Herstellung von Füller- und/oder Grundierungsschichten eines lufttrocknenden oder forciert trocknenden Mehrschichtüberzuges. Sie können jedoch auch bei höheren Temperaturen von z.B. 80 - 140 °C gehärtet werden. Sie eignen sich für die Fahrzeug- und Industrielackierung, insbesondere für die Reparaturlackierung von Fahrzeugen und Fahrzeugteilen.

Die Überzugsmittel können nach bekannten Verfahren, wie z.B. Spritzen, Tauchen, Rollen oder Rakeln, appliziert werden. Sie können beispielsweise auf gegebenenfalls vorbehandelte Substrate als solche, auf übliche Grundierungen oder angeschliffene Werks- oder Altlackierungen aufgebracht werden.

Die Überzugsmittel können beispielsweise bei Raumtemperatur oder nach einer Ablüftzeit von 5 - 15 Minuten 30 - 50 Minuten bei 60°C gehärtet werden. Die Überlackierung kann mit gängigen Überzugsmitteln, wie z.B. Einschichtdecklacken und Basislack/Klarlack-Aufbauten erfolgen, wobei die entsprechenden Überzugsmittel jeweils lösemittelbasierend oder wasserbasierend sein können.

Die Erfindung betrifft auch ein Verfahren zur Herstellung von Mehrschichtüberzügen unter Verwendung der Überzugsmittel zur Erstellung von Grundierungs- und/oder Füllerschichten.

Die erfindungsgemäß verwendeten Überzugsmittel weisen einen sehr hohen Festkörpergehalt im spritzfertigen Zustand (z.B. 80 - 90 Gew.-%) und eine gute Verspritzbarkeit auf. Mit den erfindungsgemäßen Überzugsmitteln werden VOC-Werte von 250 g/l (2,1 lbs/gal) und darunter erzielt. Gegenüber dem Stand der Technik zeichnen sich die erfindungsgemäß verwendeten Überzugsmittel durch hohe Reaktivität und kurze Trocknungszeiten aus. Das Antrocknungsverhalten ist ausgezeichnet, was sich beispielsweise in einer sehr schnellen Staubtrocknung äußert. Trotz hoher Reaktivität sind die Verarbeitungszeiten gut. Die Überzugsmittel zeigen eine sehr gute Pigmentbenetzung. Es erfolgt kein Absetzen der Pigmente. Die Überzüge sind nach kurzer Trockenzeit sehr gut schleifbar und zeigen eine sehr gute Haftung zu darunterliegenden Schichten, insbesondere ist die gute Haftung auf Säureprimern hervorzuheben. Die Überzugsmittel zeichnen sich weiterhin durch sehr gutes Stand- und Füllvermögen sowie eine geringe Neigung zu Randmarkierungen und sehr guten Lackstand beim Überlackieren aus.

Die Erfindung soll an Hand der Beispiele näher erläutert werden.

Alle Teile beziehen sich auf das Gewicht, sofern nichts anderes angegeben ist.

### Beispiel

### Herstellung eines Füllers

### 1. Stammkomponente:

In einem gereinigten trockenen Behälter werden 9 Teile eines im Handel erhältlichen blockierten cycloaliphatischen Diamins (DESMOPHEN VP LS 2142), 10 Teile eines im Handel erhältlichen estergruppenhaltigen Polyamins mit sekundären Aminogruppen (90 %ig in Butylacetat, DESMOPHEN VP LS 2973), 1,5 Teile eines handelsüblichen hydroxyfunktionellen Acrylatharzes mit einer OH-Zahl von 130-150 mg KOH/g (70 %ig in Butylacetat), 5 Teile eines Ethoxy-/Methoxypropylacetatgemisches und 0,8 Teile eines handelsüblichen Netzmittels vorgelegt und gründlich vermischt. Anschließend werden die nachstehend aufgeführten Komponenten zugegeben und mit einer üblichen Dispergiervorrichtung dispergiert:
- 0,5 Teile eines handelsüblichen Antiabsetzmittels
- 0,3 Teile Eisenoxidpigment
- 5,0 Teile Siliziumdioxid
- 11,0 Teile Titandioxid
- 8,0 Teile Korrosionsschutzpigment
- 48,8Teile Calzium-Magnesium-Carbonat
- 0,1 Teile eines handelsüblichen Verlaufsmittels.

### 2. Härterkomponente:

15 Teile Butylacetat und 85 Teile eines handelsüblichen Polyisocyanates auf Basis Hexamethylendiisocyanat-Trimer (100 % Festkörper, Viskosität 1200 mPas 23°C) werden gut miteinander vermischt.

Kurz vor der Applikation werden Stamm- und Härterkomponente im Volumenverhältnis 2 : 1 miteinander vermischt. Dabei wird die Stammkomponente vorgelegt, der Polyisocyanat-Härter zugegeben und gründlich verrührt. Mit 10 % einer üblichen Verdünnung wird auf eine Verarbeitungsviskosität von 25 Sekunden (4mm, 20 °C, DIN 53211) eingestellt. Im spritzfertigen Zustand wird ein Festkörpergehalt von 88 % erhalten. Die Verarbeitungszeit beträgt ca. 90 Minuten.

### Applikation des Füllers (VOC-Wert: 250 g/l, 2,1 lbs/gal)

Das erhaltene Überzugsmittel wird durch Spritzauftrag in 2 Spritzgängen in einer resultierenden Trockenschichtdicke von 100 - 140 µm auf gereinigte und geschliffene mit Wash-Primer grundierte Stahlbleche appliziert. Nach einer Ablüftzeit von 10 Minuten wird 40 Minuten bei 60°C getrocknet.

Es ergeben sich gut haftende und einwandfrei schleifbare Überzüge. Der Lackstand im Mehrschichtaufbau beim Überlackieren mit üblichen Decklacken ist ausgezeichnet. Im Feucht/Warm-Test und Salzsprühtest werden sehr gute Haftungs- und Korrosionsschutzergebnisse auf säurehärtbaren Primern (Washprimer) erhalten.

## Patentansprüche

1. Verwendung eines Überzugsmittels, enthaltend
A) ein oder mehrere Polyisocyanate mit freien Isocyanatgruppen,
B) ein oder mehrere Polyamine mit blockierten Aminogruppen der allgemeinen Formel 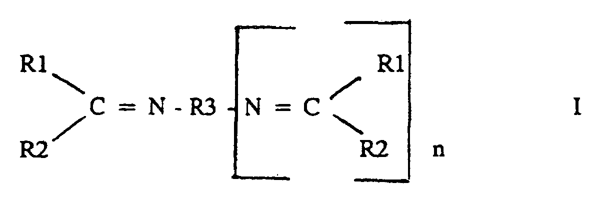 wobei n = 1-3
R1 und R2, die gleich oder verschieden sein können, = H, ein linearer oder verzweigter aliphatischer Kohlenwasserstoffrest mit 1 - 8 C-Atomen oder ein cycloaliphatischer Kohlenwasserstoffrest mit 3 - 8 C-Atomen,
R3 = (n+1)-wertiger organischer Rest, wie er durch Entfernung der primären Aminogruppen aus einem entsprechenden aliphatisch oder cycloaliphatisch gebundene Aminogruppen aufweisenden Polyamin des Molekulargewichtsbereiches Mn 60 - 2000 erhalten wird,
bedeuten,
C) ein oder mehrere estergruppenhaltige Polyamine mit sekundären Aminogruppen der allgemeinen Formel 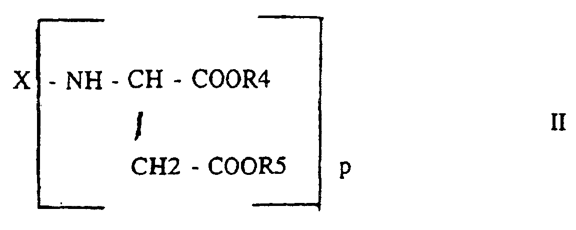 wobei X für einen p-wertigen organischen Rest steht, wie er durch Entfernung der primären Aminogruppen aus einem entsprechenden, aliphatisch oder cycloaliphatisch gebundene Aminogruppen aufweisenden Polyamin des Molekulargewichtsbereiches Mn 60 - 6000 erhalten wird,
R4 und R5 für gleiche oder verschiedene Alkylreste mit 1-8 C-Atomen stehen und
p für eine ganze Zahl von mindestens 2 steht,
D) ein oder mehrere hydroxyfunktionelle Harze sowie gegebenenfalls ein oder mehrere organische Lösemittel und gegebenenfalls ein oder mehrere lackübliche Pigmente und/oder Füllstoffe und/oder Additive,
wobei die Polyisocyanatkomponente A) in einem derartigen Mengenanteil vorliegt, daß auf eine mit Isocyanat reaktionsfähige Gruppe der Komponenten B), C) und D) 0,5 bis 2 Isocyanatgruppen entfallen und die Komponente D) in einer derartigen Menge vorliegt, daß das Gewichtsverhältnis der Summe der Komponenten B) + C) zur Komponente D) mindestens 10 : 1 beträgt, bezogen auf den Festkörpergehalt der jeweiligen Komponente, zur Herstellung von Mehrschichtlackierungen.

2. Verwendung nach Anspruch 1, **dadurch gekennzeichnet, daß** die Komponente B) zu 5 - 95 Gew.-% und die Komponente C) zu 95 - 5 Gew.-% jeweils bezogen auf die Summe des Gewichts von B) und C), vorliegen.

3. Verwendung nach Anspruch 1 oder 2, **dadurch gekennzeichnet, daß** das Gewichtsverhältnis der Summe der Komponenten B) + C) zur Komponente D) mindestens 14 : 1 beträgt.

4. Verwendung nach Anspruch 1, 2 oder 3, **dadurch gekennzeichnet, daß** es einen Festkörpergehalt von mindestens 80 Gew.-% aufweist.

5. Verwendung nach Anspruch 1, 2, 3 oder 4 bei der Kraftfahrzeugreparaturlackierung.

6. Verfahren zur Herstellung von Mehrschichtlackierungen durch Auftrag einer Grundierungs- und/oder einer Füllerschicht auf ein zu lackierendes Substrat und gegebenenfalls weiteres Überlackieren mit einer Decklackschicht oder einer Kombination aus Basislackund Klarlackschicht, **dadurch gekennzeichnet, daß** zur Erstellung der Grundierung und/oder der Füllerschicht ein Überzugsmittel, wie in einem der Ansprüche 1 bis 4 definiert, eingesetzt wird.

7. Mehrschichtlackierung, erhalten gemäß der Verwendung eines der Ansprüche 1 bis 4.

## Claims

1. Use of a coating composition containing
A) one or more polyisocyanates having free isocyanate groups,
B) one or more polyamines having blocked amino groups of the general formula 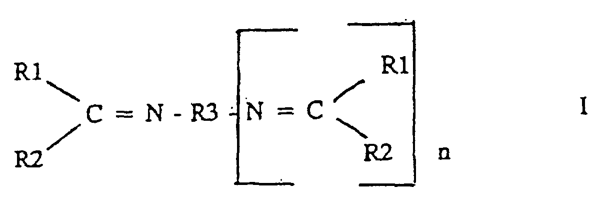 wherein n represents from 1 to 3,
R1 and R2, which may be identical or different, represent H, a linear or branched aliphatic hydrocarbon radical having from 1 to 8 carbon atoms or a cycloaliphatic hydrocarbon radical having from
3 to 8 carbon atoms,
R3 represents a (n+1)-valent organic radical as is obtained by removal of the primary amino groups from a corresponding aliphatically or cycloaliphatically bonded amino-group-containing polyamine having a molecular weight Mn in the range from 60 to 2000,
C) one or more ester-group-containing polyamines having secondary amino groups of the general formula 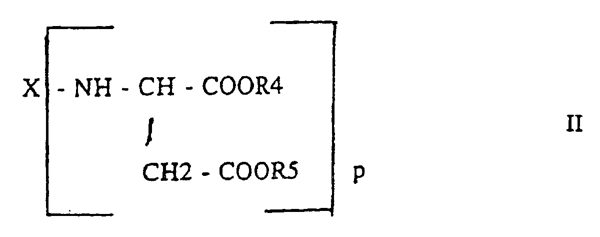 wherein X represents a p-valent organic radical as is obtained by removal of the primary amino groups from a corresponding aliphatically or cycloaliphatically bonded amino-group-containing polyamine having a molecular weight Mn in the range from 60 to 6000,
R4 and R5 represent identical or different alkyl radicals having from 1 to 8 carbon atoms, and
p represents an integer of at least 2,
D) one or more hydroxy-functional resins and optionally one or more organic solvents and optionally one or more pigments and/or fillers and/or additives conventional in lacquers,
wherein the polyisocyanate component A) is present in such an amount that from 0.5 to 2 isocyanate groups are assigned to an isocyanate-reactive group of components B), C) and D), and component D) is present in such an amount that the weight ratio of the sum of components B) + C) to component D) is at least 10:1, based on the solids content of the component in question,
in the production of multi-layer lacquer coatings.

2. Use according to claim 1, **characterised in that** component B) is present in an amount of from 5 to 95 wt.% and component C) is present in an amount of from 95 to 5 wt.%, in each case based on the sum of the weight of B) and C).

3. Use according to claim 1 or 2, **characterised in that** the weight ratio of the sum of components B) + C) to component D) is at least 14:1.

4. Use according to claim 1, 2 or 3, **characterised in that** it has a solids content of at least 80 wt.%.

5. Use according to claim 1, 2, 3 or 4 in the repair lacquering of motor vehicles.

6. Process for the production of multi-layer lacquer coatings by application of a primer and/or filler layer to a substrate that is to be lacquered and optional further over-lacquering with a covering lacquer layer or a combination of base lacquer and clear lacquer layer, **characterised in that** a coating composition as defined in any one of claims 1 to 4 is used to produce the primer and/or the filler layer.

7. Multi-layer lacquer coating obtained according to the use of any one of claims 1 to 4.

## Revendications

1. Utilisation d'une composition de revêtement contenant
A) un ou plusieurs polyisocyanates comportant des groupes isocyanate libres,
B) une ou plusieurs polyamines comportant des groupes amino bloqués de formule générale 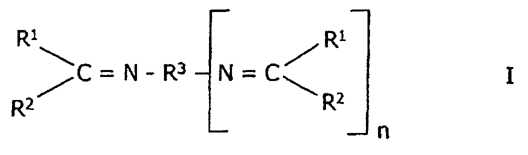 où n = 1-3,
R¹ et R² pouvant être identiques ou différents, représentent H, un reste hydrocarboné aliphatique, linéaire ou ramifié, comportant 1 à 8 atomes de C ou un reste hydrocarboné cycloaliphatique comportant 3 à 8 atomes de C,
R³ est un reste organique à (n + 1) valences, tel qu'il est obtenu en éliminant les groupes amino primaires d'une polyamine correspondante ayant un poids moléculaire Mn compris entre 60 et 2 000, présentant des groupes amino liés à des restes aliphatiques ou cycloaliphatiques,
C) une ou plusieurs polyamines contenant des groupes esters, comportant des groupes amino secondaires de formule générale 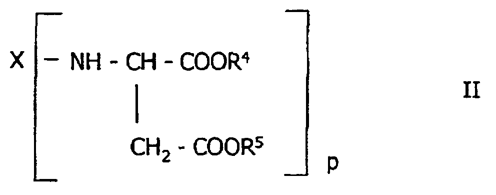 où X représente un reste organique à p valences, tel qu'il est obtenu en éliminant les groupes amino primaires d'une polyamine correspondante ayant un poids moléculaire Mn compris entre 60 et 6 000, présentant des groupes amino liés à des restes aliphatiques ou cycloaliphatiques,
R⁴ et R⁵ représentent des restes alkyles identiques ou différents, comportant 1 à 8 atomes de C et
p est un nombre entier au moins égal à 2,
D) une ou plusieurs résines ayant des groupes fonctionnels hydroxy, ainsi qu'éventuellement un ou plusieurs solvants organiques et éventuellement un ou plusieurs pigments usuels pour les vernis et/ou des matières de charge et/ou des additifs, le composant polyisocyanate A) étant présent dans une proportion telle que l'on ait pour un groupe des composants B), C) et D) apte à réagir avec l'isocyanate 0,5 à 2 groupes isocyanate et le composant D) étant présent en une quantité telle que le rapport pondéral de la somme des composants B) + C) au composant D) soit d'au moins 10:1, rapporté à la teneur en matières solides des composants concernés pour la réalisation des revêtements multicouches.

2. Utilisation selon la revendication 1, **caractérisée en ce que** le composant B) est présent dans une proportion comprise entre 5 et 95 % en poids et le composant C) dans une proportion comprise entre 95 et 5 % en poids, rapportée à la somme du poids de B) et C).

3. Utilisation selon la revendication 1 ou 2, **caractérisée en ce que** le rapport pondéral de la somme des composants B) + C) au composant D) est d'au moins 14:1.

4. Utilisation selon les revendications 1, 2 ou 3, **caractérisée en ce que** la composition présente une teneur en matières solides d'au moins 80 % en poids.

5. Utilisation selon les revendications 1, 2, 3 ou 4 dans les vernis de réparation pour véhicules automobiles.

6. Procédé pour la réalisation de revêtements multicouches en appliquant une couche de fond et/ou une couche de matière de charge sur un substrat à revêtir, puis éventuellement en recouvrant d'une couche de vernis de finition ou d'une combinaison d'une couche de vernis de base et d'une couche de vernis transparent, **caractérisé en ce que** l'on utilise pour la réalisation de la couche de fond et/ou de la couche de matière de charge une composition de revêtement telle que définie dans l'une des revendications 1 à 4.

7. Revêtement multicouche obtenu selon l'utilisation de l'une des revendications 1 à 4.
